# EUROPEAN PATENT APPLICATION

(11) **EP 4 328 785 A1**
(43) Date of publication of application: **28.02.2024**
(21) Application number: 23190513.4
(22) Date of filing: 09.08.2023
(51) Int. Cl.: G06F 30/12, G06F 30/13, G06F 111/20

(54) **SYSTEMS AND METHODS FOR DISPLAYING A TWO-DIMENSIONAL CONTENT IN A THREE-DIMENSIONAL SPACE**

(30) Priority: 22.08.2022 US 202217892937
(71) Applicant: Bluebeam, Inc., Pasadena, CA 91105 (US)
(72) Inventor: LEE, Jae Min, California, 91105 (US); WEZOREK, Joseph, Pasadena, California, 91105 (US); MOORTHY, Vinay, Pasadena, California, 91105 (US)
(74) Representative: CSY Herts

(57) **Abstract**

Systems and methods are disclosed for displaying 2D building drawings in a 3D space. One method comprises receiving 2D building drawings from a device, the 2D building drawings include symbols and/or metadata, and the symbols indicate a correlation between an elevation, a floorplan, and a section of the 2D building drawings. The plurality of 2D building drawings is processed to detect the correlation between the symbols and the metadata. A selection is received of a first 2D building drawing from the 2D building drawings and/or a first symbol in the first 2D building drawing. A second 2D building drawing is retrieved from the 2D building drawings based on the correlation between the first symbol and a second symbol of the second 2D building drawing. A 3D design model is generated by aligning the first 2D building drawing and the second 2D building drawing in the 3D space.

## Description

### TECHNICAL FIELD

The present disclosure relates to systems and methods for automatically aligning drawings. More particularly, the present disclosure relates to systems and methods for aligning two-dimensional (2D) building drawings for display in a three-dimensional (3D) space.

### BACKGROUND

Typically, a construction project commences with a design phase, where users, e.g., architects, engineers, etc., design the overall shape and layout of a structure, e.g., a building, in a 2D format. A large number of 2D building drawings may be required to represent various features of the structure and users may experience difficulty while navigating through these 2D building drawings, especially because 2D building drawings do not efficiently present the overall shape and layout of the structure. Alignment of the 2D building drawings within a 3D space is important to improve organization, navigation, accessibility, and efficiency while evaluating the 2D building drawings.

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY OF THE DISCLOSURE

One embodiment provides a computer-implemented method for displaying 2D building drawings in a 3D space, comprising: receiving a plurality of 2D building drawings from a device, wherein the plurality of 2D building drawings include one or more symbols, metadata, or a combination thereof, and wherein the one or more symbols indicate a correlation between an elevation, a floorplan, and a section of the plurality of 2D building drawings; processing the plurality of 2D building drawings to detect the correlation between the one or more symbols and the metadata of the plurality of 2D building drawings; receiving a selection, via a user interface of the device, of a first 2D building drawing from the plurality of 2D building drawings, at least one first symbol in the first 2D building drawing, or a combination thereof; retrieving a second 2D building drawing from the plurality of 2D building drawings based, at least in part, on the correlation between the at least one first symbol and at least one second symbol of the second 2D building drawing; and generating a 3D design model by aligning the first 2D building drawing and the second 2D building drawing in the 3D space.

One embodiment provides a system for displaying 2D building drawings in a 3D space. The system may comprise one or more processors; at least one non-transitory computer readable medium storing instructions which, when executed by the one or more processors, cause the one or more processors to perform operations comprising: receiving a plurality of 2D building drawings from a device, wherein the plurality of 2D building drawings include one or more symbols, metadata, or a combination thereof, and wherein the one or more symbols indicate a correlation between an elevation, a floorplan, and a section of the plurality of 2D building drawings; processing the plurality of 2D building drawings to detect the correlation between the one or more symbols and the metadata of the plurality of 2D building drawings; receiving a selection, via a user interface of the device, of a first 2D building drawing from the plurality of 2D building drawings, at least one first symbol in the first 2D building drawing, or a combination thereof; retrieving a second 2D building drawing from the plurality of 2D building drawings based, at least in part, on the correlation between the at least one first symbol and at least one second symbol of the second 2D building drawing; and generating a 3D design model by aligning the first 2D building drawing and the second 2D building drawing in the 3D space.

One embodiment provides a non-transitory computer readable medium for displaying 2D building drawings in a 3D space. The non-transitory computer readable medium may store instructions which, when executed by one or more processors, cause the one or more processors to perform operations comprising: receiving a plurality of 2D building drawings from a device, wherein the plurality of 2D building drawings include one or more symbols, metadata, or a combination thereof, and wherein the one or more symbols indicate a correlation between an elevation, a floorplan, and a section of the plurality of 2D building drawings; processing the plurality of 2D building drawings to detect the correlation between the one or more symbols and the metadata, of the plurality of 2D building drawings; receiving a selection, via a user interface of the device, of a first 2D building drawing from the plurality of 2D building drawings, at least one first symbol in the first 2D building drawing, or a combination thereof; retrieving a second 2D building drawing from the plurality of 2D building drawings based, at least in part, on the correlation between the at least one first symbol and at least one second symbol of the second 2D building drawing; and generating a 3D design model by aligning the first 2D building drawing and the second 2D building drawing in the 3D space.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 is a diagram of a system capable of aligning 2D building drawings in a 3D space, according to one aspect of the disclosure.
FIG. 2 is a diagram of the components of drawing conversion platform 109, according to one aspect of the disclosure.
FIG. 3 is a flowchart of a process for aligning 2D building drawings in a 3D space, according to one aspect of the disclosure.
FIG. 4 is a flow diagram for aligning 2D building drawings for presentation in a 3D space, according to one aspect of the disclosure.
FIG. 5 is a user interface diagram that represents a display of metadata for a 2D building drawing, according to one aspect of the disclosure.
FIG. 6 is a user interface diagram that represents auto-detection of 2D building drawings, according to one aspect of the disclosure.
FIGs. 7 A-C are diagrams that represent symbols of 2D building drawings, according to one aspect of the disclosure.
FIG. 8 is a user interface diagram that represents a detection of a symbol in a 2D building drawing and a linking of the detected symbol to a corresponding 2D building drawing, according to one aspect of the disclosure.
FIG. 9 is a user interface diagram that represents automatic combination of partial 2D building drawings, according to one aspect of the disclosure.
FIG. 10 is a user interface diagram that represents automatic combination of partial 2D building drawings to generate a single 2D building drawing, according to one aspect of the disclosure.
FIG. 11 is a user interface diagram that represents aligned 2D building drawings as a 3D design model in a 3D space, according to one aspect of the disclosure.
FIG. 12 is a user interface diagram that represents various 3D design model views based on subjects, according to one aspect of the disclosure.
FIG. 13 illustrates a sheet explorer view that shows the hierarchy for a 3D design model in a tree structure, according to one aspect of the disclosure.
FIG. 14 illustrates a detailed view of a 3D design model, according to one aspect of the disclosure.
FIGs. 15 A-B show a 3D design model and an exploded view of the 3D design model, according to one aspect of the disclosure.
FIG. 16 is a user interface diagram that represents a side-by-side display of a 2D view and a 3D view for a 2D building drawing, according to one aspect of the disclosure.
FIG. 17 is a user interface diagram that shows a comparison between components of the 3D design model in a 3D space, according to one aspect of the disclosure.
FIG. 18 illustrates an implementation of a computer system that may execute techniques presented herein.

### DETAILED DESCRIPTION OF EMBODIMENTS

The following embodiments describe systems and methods for aligning images and, more particularly, for aligning 2D building drawings for display in a 3D space.

Architecture, engineering, and construction (AEC) industries actively use 2D building drawings to represent structural designs. However, users spend a lot of time organizing these 2D building drawings to make them accessible to all the stakeholders. For example, an average-sized construction project may have a voluminous number of 2D building drawings from multiple disciplines, e.g., civil, structural, architectural, mechanical, electrical, plumbing, etc. The users accessing the 2D building drawings may spend a lot of time organizing these drawings to visualize and understand the project. Users may have to mentally align and orient the 2D building drawings to imagine how a structure is formed or constructed.

Generally, a large area of a structure may be divided into various 2D building drawings to fit into standardized sheet sizes. Users may process a significant number of these partial 2D building drawings, and may repeatedly sort and arrange these partial 2D building drawings to visualize the large area. In one instance, users may have to open and/or close multiple files when each of the 2D building drawings is stored as a separate file. In another instance, users may have to scroll up and down to access the correct 2D building drawing when the 2D building drawings are stored in a single file. The user may also experience difficulty while comparing the 2D building drawings from different windows with different configurations. Therefore, there is a need for systems and methods that automatically connect the 2D building drawings and represent them in a 3D space to improve organization, navigation, accessibility, and efficiency while evaluating the 2D building drawings.

The present disclosure concerns systems and methods for displaying 2D building drawings arranged in a 3D space. In one embodiment, the symbols included in the 2D building drawings may be automatically recognized and analyzed. The data contained in these symbols may be automatically extracted and then utilized to arrange the views of the 2D building drawing, e.g., floorplan, section, elevation, isometric, perspective, birds eye, worms eye, or any other views, for display in a 3D space. These data may also connect partial 2D building drawings to create a unified 3D design model, and may automatically align 2D building drawings of different disciplines. Since the 2D building drawings are automatically aligned, the contents of a pair of 2D building drawings may be compared and the difference may be analyzed by simply selecting the two 2D building drawings, without the need for a complex alignment process.

The subject matter of the present disclosure will now be described more fully hereinafter with reference to the accompanying drawings, which form a part hereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter may be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware or any combination thereof. The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section.

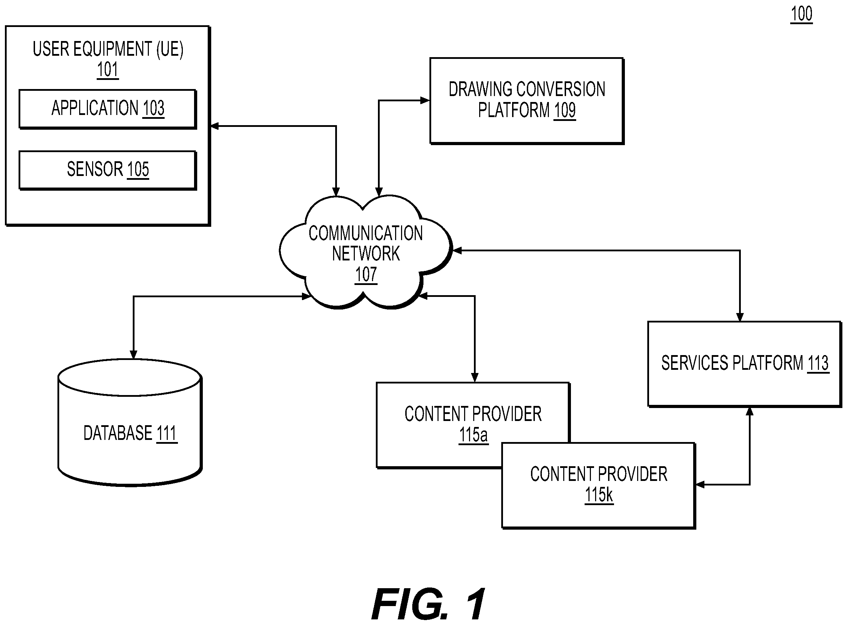

Referring now to the appended drawings, FIG. 1 is a diagram of a system capable of aligning 2D building drawings in a 3D space, according to one example embodiment. FIG. 1, an example architecture of one or more example embodiments of the present invention, includes system 100 that comprises user equipment (UE) 101a-101n (collectively referred to as UE 101) that may include or be associated with applications 103a-103n (collectively referred to as applications 103) and sensors 105a-105n (collectively referred to as sensors 105). In one embodiment, drawing conversion platform 109 has connectivity to UE 101, database 111, services platform 113, and content provider 115a-115k (collectively referred to as content provider 115) via communication network 107, e.g., a wireless communication network.

In one embodiment, user equipment (UE) 101 may include, but is not restricted to, any type of mobile terminal, wireless terminal, fixed terminal, or portable terminal. Examples of UE 101, may include, but are not restricted to, server computers, gateway computers, desktop computers, laptop computers, hand-held computers, mobile communications devices, a wireless communication device, cell phones, smartphones, a Personal Communication System (PCS) device, tablets, or any electronic device capable of providing or rendering imaging data. In one embodiment, UE 101 may be variously configured with different features to enable generating, sharing, and viewing of visual content, such as 2D drawings, 2D images, 2D videos, 3D drawings, 3D images, 3D videos, etc. Any known and future implementations of the UE 101 may also be applicable.

In one embodiment, UE 101 may include applications 103. Further, applications 103 may include various applications such as, but not restricted to, camera/imaging applications, content provisioning applications, networking applications, multimedia applications, media player applications, software applications, and the like. In one embodiment, one of the applications 103 at UE 101 may act as a client for drawing conversion platform 109 and may perform one or more functions associated with the functions of drawing conversion platform 109 by interacting with drawing conversion platform 109 over communication network 107, e.g., via an Application Programming Interface (API). In one embodiment, applications 103 may enable UE 101 to communicate with and receive imaging data from a network or drawing database 111. In another embodiment, applications 103 may enable a user to locate a 2D or 3D design document from database 111 to open and make modifications to the design document, e.g., add, remove, or modify drawings, annotations, markups, etc., save the modified design document in database 111, collaborate with other users synchronously or asynchronously to review/edit the design document, etc. In one example embodiment, applications 103 may be a PDF document reviewing/editing software component. In another example embodiment, applications 103 may be a document reviewing/editing software component also compatible with other types of files such as, e.g., BIM files, word processing documents, CAD drawings, etc. The documents reviewed using applications 103 may include, but may not be limited to, architectural drawings, engineering drawings, and construction drawings, e.g., documents frequently used in the architecture, engineering, and construction (AEC) industry. In one embodiment, these drawings are format neutral, and may be in various formats, e.g., vector format, raster format, etc.

In one embodiment, UE 101 may include sensor 105. Sensor 105 includes an image sensor, e.g., a camera configured to capture image data from papers. By way of example, sensor 105 may also include any other type of sensor including, but not limited to, a depth sensor, any scanning sensors. In one embodiment, sensors 105 may further include, for example, a network detection sensor for detecting wireless signals or receivers for different short-range communications, e.g., Bluetooth, Wi-Fi, Li-Fi, near field communication (NFC), etc., an audio recorder for gathering audio data, a global positioning sensor for gathering location data, light sensors, and the like. Any known and future implementations of sensor 105 may also be applicable.

Further, various elements of system 100 may communicate with each other through communication network 107. Communication network 107 of system 100 may include one or more networks such as a data network, a wired or wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including 5G (5th Generation), 4G, 3G, 2G, Long Term Evolution (LTE), enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

In one instance, drawing conversion platform 109 may be a platform with multiple interconnected components. Drawing conversion platform 109 may include one or more servers, intelligent networking devices, computing devices, components, and corresponding software for automatically aligning 2D building drawings in a 3D space. In addition, it is noted that drawing conversion platform 109 may be a separate entity of system 100 or a part of UE 101. Any known or still developing methods, techniques, or processes for estimating component wear in a machine may be employed by drawing conversion platform 109. As discussed in further detail below, drawing conversion platform 109 may interact with various components of system 100 to process 2D building drawings to detect symbols, link the 2D building drawings based on the symbols, and align the linked 2D building drawings in a 3D space.

In one embodiment, database 111 may be any type of database, such as relational, hierarchical, object-oriented, and/or the like, wherein data are organized in any suitable manner, including as data tables or lookup tables. In one embodiment, database 111 may store and manage multiple types of information, e.g., 2D drawings or videos, 3D images or videos, etc., that can provide means for aiding in the content provisioning, content sharing, and content mapping process. Database 111 may store, among other things, configuration information for drawing content analysis, 2D to 3D drawing conversion methods corresponding to content of drawings, 2D drawing mapping methods, etc. In some embodiments, database 111 may also store depth map generation methods corresponding to content of drawings, configuration information for generating 3D images based on depth maps, etc. In one embodiment, database 111 may include a machine-learning based training database with pre-defined mapping defining a relationship between various input parameters and output parameters based on various statistical methods. In one example embodiment, the training database may include machine-learning algorithms to learn mappings between various input parameters related to 2D building drawings, etc. In one embodiment, the training database may include a dataset that may include data collections that are based on object types, symbols, subject field, and the like. In an embodiment, the training database may be routinely updated and/or supplemented based on machine learning methods.

Services platform 113 may include any type of service. By way of example, services platform 113 may include content (e.g., images, textual, video, audio, etc.) provisioning services/application, storage services/application, networking services/application, information-based services, contextual information determination services/application, etc. In one embodiment, services platform 113 may interact with UE 101, drawing conversion platform 109, and content provider 115 to supplement or aid in the processing of the 2D building drawing content. In one embodiment, the services platform 113 may be implemented or embedded in drawing conversion platform 109 or its functions.

Content providers 115 may provide content to UE 101, drawing conversion platform 109, and services platform 113. The content provided may be any type of content, such as drawing content, e.g., 2D building drawings or videos, 3D images or videos, textual content, e.g., data within images, video content, audio content, etc. In one embodiment, content provider 115 may provide content that may supplement the content of applications 103, sensors 105, or a combination thereof. In one embodiment, content provider 115 may provide or supplement the content provisioning services/application, application services/ application, storage services/application, contextual information determination services/ application, notification services/application, or any combination thereof. In one embodiment, the content provider 115 may also store content associated with UE 101, drawing conversion platform 109, and services platform 113. In another embodiment, the content provider 115 may manage access to a central repository of data and offer a consistent, standard interface to data.

By way of example, UE 101, drawing conversion platform 109, services platform 113, and content provider 115 communicate with each other and other components of the communication network 107 using well known, new or still developing protocols. In this context, a protocol includes a set of rules defining how the network nodes within the communication network 107 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

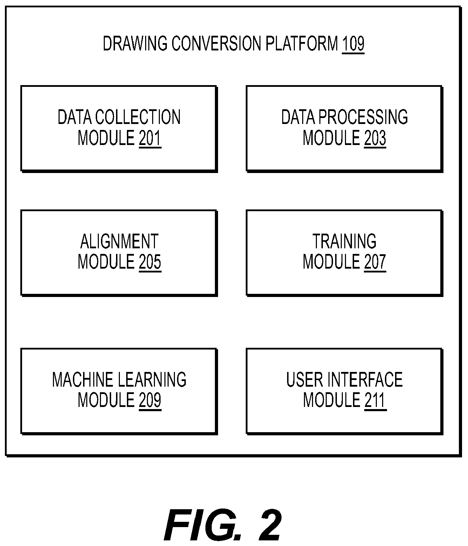

FIG. 2 is a diagram of the components of drawing conversion platform 109, according to one example embodiment. As used herein, terms such as "component" or "module" generally encompass hardware and/or software, e.g., that a processor or the like may use to implement associated functionality. By way of example, drawing conversion platform 109 includes one or more components for aligning 2D building drawings in a 3D space. It is contemplated that the functions of these components may be combined in one or more components or performed by other components of equivalent functionality. In one instance, drawing conversion platform 109 comprises data collection module 201, data processing module 203, alignment module 205, training module 207, machine learning module 209, and user interface module 211, or any combination thereof.

In one embodiment, data collection module 201 may collect, e.g., in near real-time or in real-time, 2D design documents from UE 101, database 111, and/or content provider 115 through various data collection techniques. In one example embodiment, 2D design documents are electronic documents that include 2D building drawings or videos of design elements. The 2D design documents may also comprise supplemental information, such as symbols, metadata, annotations added by a user, etc. The 2D design document may be, for example, a PDF document, which may be reviewed and edited via UE 101. In another embodiment, data collection module 201 may collect, e.g., in near real-time or in real-time, 3D design files from UE 101 through various data collection techniques. In one example embodiment, the 3D design file may be any data file that includes a 3D design model, the 3D design model comprising design elements, and information relevant to the design elements from 2D design documents. Data collection module 201 may use a web-crawling component to access various databases or other information sources to collect the relevant data pertaining to 2D design documents and/or 3D design files. In one instance, data collection module 201 may include various software applications, e.g., data mining applications in Extended Meta Language (XML), that automatically search for and return relevant data regarding various 2D design documents and/or 3D design files. In another instance, data collection module 201 may parse and arrange the 2D design documents and/or 3D design files into a common format that can be easily processed by other modules and platforms.

Data processing module 203 may process, via various data processing techniques, data collected by data collection module 201. In one example embodiment, data processing module 203 may process 2D design documents to detect one or more features of the 2D design documents, e.g., one or symbols and/or metadata, through various image recognition and processing techniques, e.g., pattern recognition, object recognition, etc. Data processing module 203 may then extract the detected features, e.g., one or symbols and/or metadata, through various data extraction techniques. The extracted data may be sorted, organized, and cleansed, e.g., duplicate entries are deleted, missing values are removed or enriched, and audits may be performed to produce data that is reliable, consistent, and usable. Data processing module 203 may transmit the extracted data to alignment module 205 for further processing.

Alignment module 205 may process the extracted data, e.g., the one or symbols and/or metadata, to align the 2D building drawings of the 2D design documents within a 3D space. In one embodiment, alignment module 205 may utilize the extracted data to link symbols and/or metadata of a first 2D building drawing to symbols and/or metadata of other 2D building drawings. For example, alignment module 205 may compare the symbols and the data contained within the symbols to determine a matching pattern to link one or more symbols. In other embodiments, however, an alignment technique that is different from the above-described technique utilizing symbols and/or metadata may be used. In other words, any alignment technique suitable for aligning two or more images, e.g., drawings, that represent the same or substantially similar object(s) may be used to align the 2D building drawings in a 3D space.

In one embodiment, training module 207 may provide a supervised learning to machine learning module 209 by providing training data that contains input and correct output, to allow machine learning module 209 (or a machine learning model thereof) to learn over time. The training may be performed based on the deviation of a processed result from a documented result when the inputs are fed into machine learning module 209, e.g., an algorithm measures its accuracy through the loss function, adjusting until the error has been sufficiently minimized. In one embodiment, training data may comprise images of sample 2D building drawings, sample symbols in these 2D building drawings, sample metadata, etc. For example, the training data may comprise various construction symbols used in construction or architectural drawings, and their associated types or designations such as a floorplan, a section (i.e., a cross-section), an elevation, a wall, a column, a stairway, a door, a window, etc. Each set of training data may thus include sample 2D building drawings, sample symbols in these 2D building drawings, and sample metadata, for training machine learning module 209 to identify and/or classify design elements (e.g., symbols, etc.) within 2D design documents. Training module 207 may provide the trained machine learning module 209 to UE 101 to detect one or more design elements within a 2D design document. Training module 207 may conduct the training in any suitable manner, e.g., in batches, and may include any suitable training methodology. Training may be performed periodically, and/or continuously, e.g., in real-time or near real-time.

Machine learning module 209 receives the training data from training module 207. In one embodiment, machine learning module 209 may randomize the ordering of the training data, visualize the training data to identify relevant relationships between different variables, identify any data imbalances, split the training data into two parts where one part is for training a model and the other part is for validating the trained model, de-duplicating, normalizing, correcting errors in the training data, and so on. Machine learning module 209 may implement various machine learning techniques, e.g., decision tree learning, association rule learning, neural network (e.g., recurrent neural networks, convolutional neural networks, deep neural networks), inductive programming logic, support vector machines, Bayesian models, etc. In another embodiment, machine learning module 209 may leverage one or more classification models trained to classify the training data and/or one or more prediction models trained to predict an outcome based on the training data. For example, machine learning module 209 may input the training data to classification models and/or prediction models to link a plurality of 2D building drawings for presentation in a 3D space. Machine learning module 209 may use outcomes associated with the predictions or classifications to reinforce/retrain the models.

In one embodiment, user interface module 211 may generate a presentation in a user interface of UE 101. For example, the presentation may include a display of the plurality of linked 2D building drawings in a 3D space and/or a display of a 3D design model. In one embodiment, user interface module 211 may employ various application programming interfaces (APIs) or other function calls corresponding to the applications on UE 101, thus enabling the display of graphics primitives such as icons, menus, buttons, data entry fields, etc., for generating the user interface elements. In one instance, user interface module 211 may include data access interface configured to allow users to access, configure, modify, store, and/or download information to a UE 101 or any other type of data device. In another instance, user interface module 211 may cause interfacing of the guidance information with the users to include, at least in part, one or more annotations, text messages, audio messages, video messages, or a combination thereof. For example, user interface module 211 may present an audio/visual in the interface of UE 101 to depict the 2D building drawings or 3D design models determined by the machine learning module 209, the alignment module 205, or the combination thereof.

The above-presented modules and components of drawing conversion platform 109 may be implemented in hardware, firmware, software, or a combination thereof. Though depicted as a separate entity in FIG. 1, it is contemplated that drawing conversion platform 109 may be implemented for direct operation by respective UE 101. As such, drawing conversion platform 109 may generate direct signal inputs by way of the operating system of the UE 101. In another embodiment, one or more of the modules 201-211 may be implemented for operation by respective UEs, as drawing conversion platform 109, or a combination thereof. The various executions presented herein contemplate any and all arrangements and models.

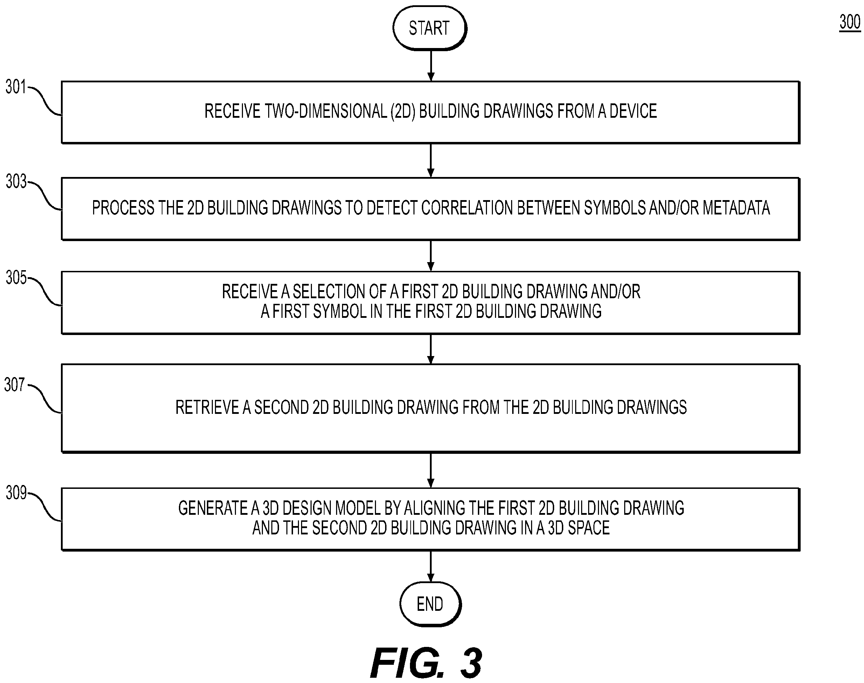

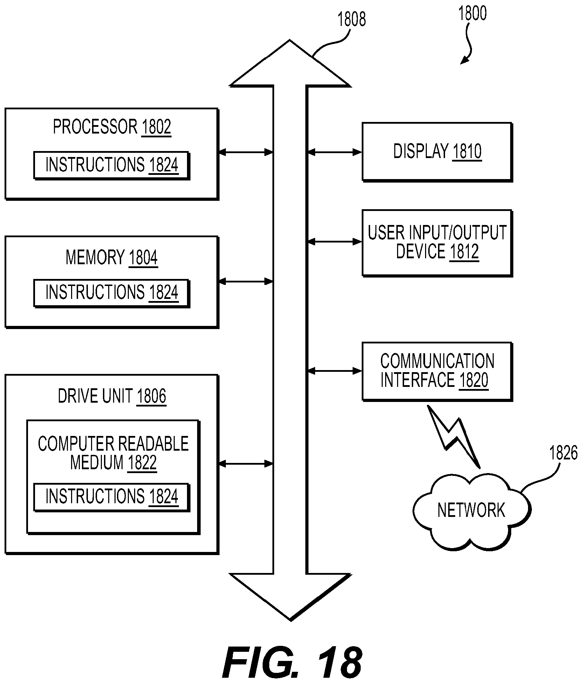

FIG. 3 is a flowchart of a process for aligning 2D building drawings in a 3D space, according to one example embodiment. In various embodiments, drawing conversion platform 109 and/or any of modules 201-211 may perform one or more portions of process 300 and may be implemented in, for instance, a chip set including a processor and a memory as shown in FIG. 18. As such, drawing conversion platform 109 and/or any of modules 201-211 may provide means for accomplishing various parts of process 300, as well as means for accomplishing embodiments of other processes described herein in conjunction with other components of system 100. Although process 300 is illustrated and described as a sequence of steps, it is contemplated that various embodiments of process 300 may be performed in any order or combination and need not include all of the illustrated steps.

In step 301, drawing conversion platform 109 may receive a plurality of 2D building drawings, e.g., 2D drawings, from a device, e.g., UE 101. In one embodiment, the plurality of 2D building drawings may be in a portable document format (PDF) and may include one or more of architectural drawings, engineering drawings, or construction drawings. In one embodiment, the plurality of 2D building drawings include one or more symbols, metadata, or a combination thereof. For example, each 2D building drawing may include at least one symbol, metadata, or a combination thereof. One or more symbols may indicate a correlation between an elevation, a floorplan, and a section of the plurality of 2D building drawings. In some embodiments, one or more symbols may indicate a correlation between elevations, between floorplans, or between sections of the plurality of 2D building drawings. In one example embodiment, one or more symbols may include a callout symbol that may comprise a callout number, a start point, and an endpoint to indicate an arrangement of the plurality of 2D building drawings. In one example embodiment, one or more symbols may include a section symbol that may comprise a drawing number, a sheet number, a view direction sign, and a guideline icon to indicate a correlation between the floorplan and the section of the plurality of 2D building drawings. In one example embodiment, one or more symbols may include an elevation symbol that may comprise a drawing number, a sheet number, and a view direction sign to indicate a correlation between the floorplan and the elevation of the plurality of 2D building drawings.

In step 303, drawing conversion platform 109 may process the plurality of 2D building drawings to detect the correlation between the one or more symbols and the metadata of the plurality of 2D building drawings. For example, a symbol and metadata of one image may be correlated with a symbol and metadata of another image. In one embodiment, drawing conversion platform 109 may detect, via a trained machine learning model, the one or more symbols, the metadata, or a combination thereof associated with the plurality of 2D building drawings. The trained machine learning model may be trained using a library of sample images with sample symbols and sample metadata.

In step 305, drawing conversion platform 109 may receive a selection, via a user interface of the device, of a first 2D building drawing from the plurality of 2D building drawings, a first symbol in the first 2D building drawing, or a combination thereof.

In step 307, drawing conversion platform 109 may retrieve a second 2D building drawing from the plurality of 2D building drawings based, at least in part, on the correlation between the first symbol and a second symbol of the second 2D building drawing. In one embodiment, drawing conversion platform 109 may extract data associated with the first symbol and the second symbol, the metadata associated with the first and second 2D building drawing, or a combination thereof. Drawing conversion platform 109 may link the first symbol of the first 2D building drawing and the second symbol of the second 2D building drawing based, at least in part, on the extracted data and metadata.

In step 309, drawing conversion platform 109 may generate a 3D design model by aligning the first 2D building drawing and the second 2D building drawing in a 3D space based, at least in part, on the first symbol and the second symbol. In one embodiment, drawing conversion platform 109 may align 2D building drawings in a 3D space based, at least in part, on the linked elevation, floorplan, and section. In one example embodiment, the linked elevation, floorplan, and section may indicate location, position, direction, orientation, or a combination thereof for the various portions of a structure, e.g., building, represented in the 2D building drawings.

In one example embodiment, a straight line passing through a start point and an end point of a section symbol S in a floorplan-A may be line-L. There may be several callout lines in the floorplan-A, and each callout line may be designated a name. In this example embodiment, callout lines are indicated as a and b, and the intersection of these callout lines and line-L may be indicated as l_a and l_b. The section symbol S includes the number of the section drawings to which this symbol is connected. The number of the section drawing may be indicated as S_N and the section drawing of the number may be denoted as D_S_N. The section drawing D_S_N and floorplan-A may share callout lines a and b. This section may contain lines representing the floor levels, and F may indicate a level line that is the same as the level in the floorplan-A among the level lines in the section drawing. In this example embodiment, F_a and F_b may be the intersections of level line F and callout lines a and b. Points l_a and l_b in the floorplan-A may coincide with points F_a and F_b in the section drawing. By using a matrix that makes each of these two points coincide, the section drawing D_S_N and the floorplan-A may be correctly positioned in the 3D space.

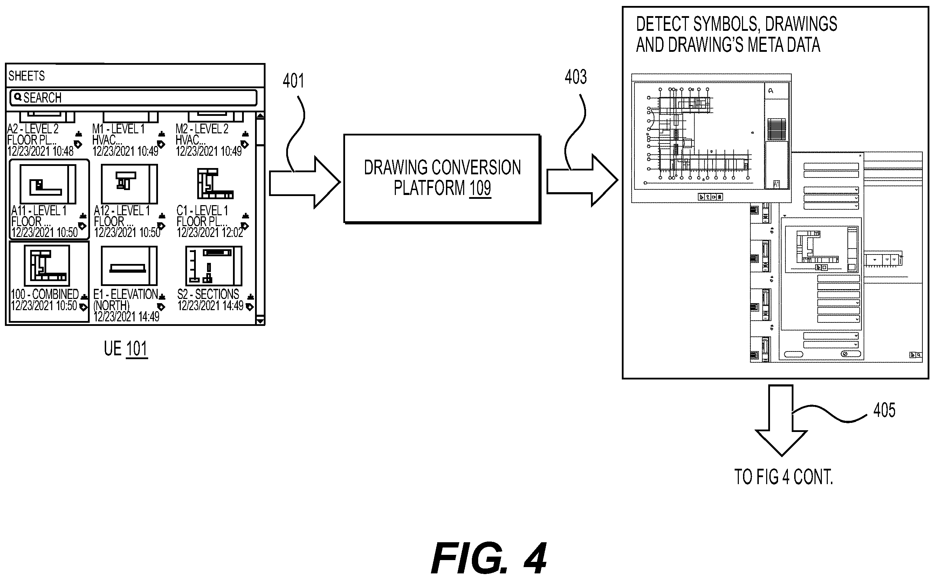

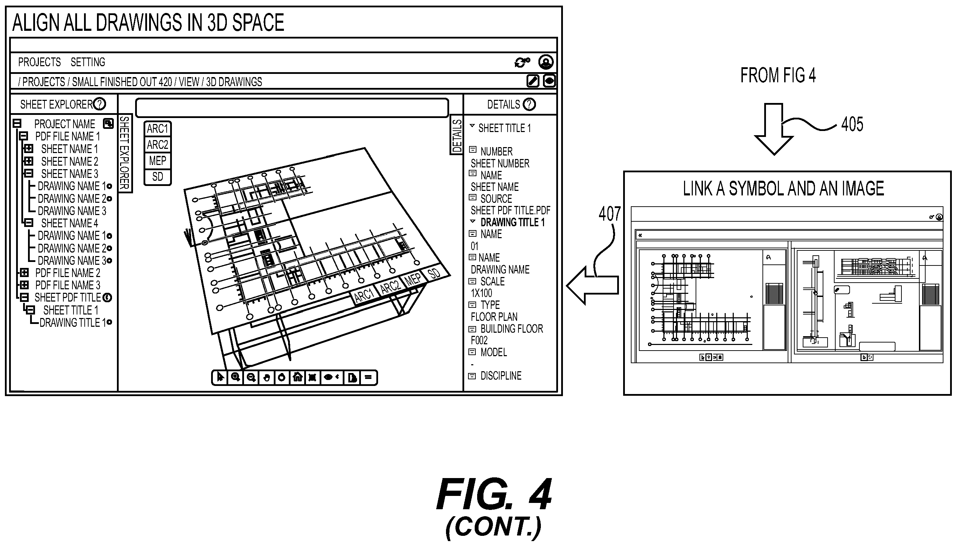

FIG. 4 is a flow diagram for aligning 2D building drawings for presentation in a 3D space, according to one example embodiment. As illustrated, drawing conversion platform 109 may receive 2D building drawings from UE 101 (step 401). In step 403, drawing conversion platform 109 may process the received 2D building drawings to detect, via a trained machine learning model, the symbols and/or the metadata associated with the 2D building drawings. The drawing conversion platform 109 may extract data associated with the symbols and/or the metadata associated with the 2D building drawings to link, or make associations between, the symbols of the 2D building drawings (step 405). In one example embodiment, a user may select, via a user interface of the device, a symbol in a first 2D building drawing of the 2D building drawings, whereupon drawing conversion platform 109 may retrieve a second 2D building drawing from the 2D building drawings based, at least in part, on the linked symbols between the first 2D building drawing and the second 2D building drawing. The drawing conversion platform 109 may align the linked first 2D building drawing and the second 2D design and may display these aligned 2D building drawings in a 3D space as a 3D design model (step 407).

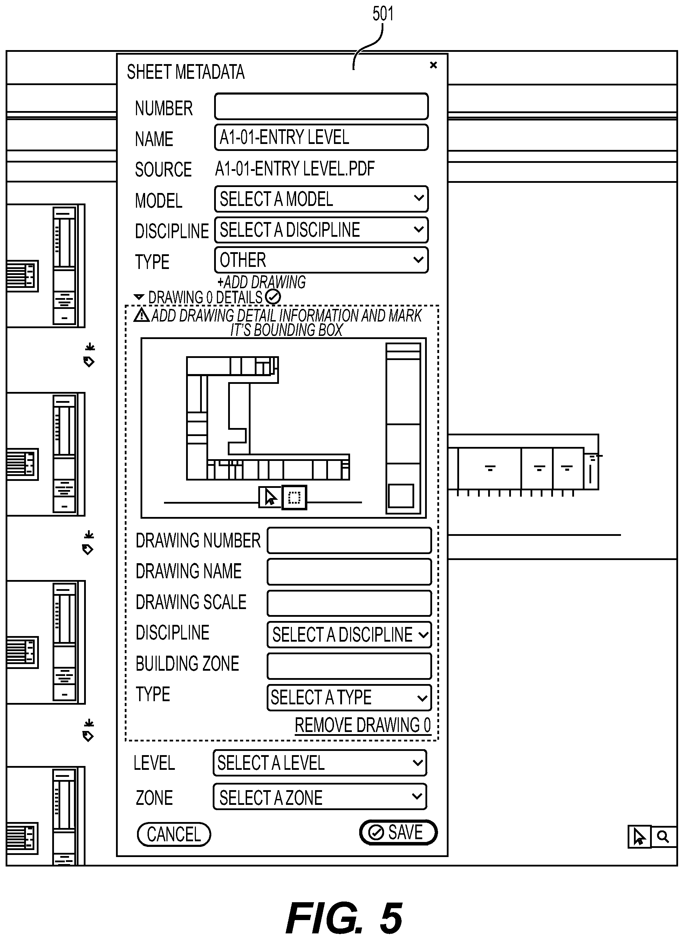

FIG. 5 is a user interface diagram that represents a display of metadata for a 2D building drawing, according to one example embodiment. In one embodiment, the 2D building drawings may be architectural drawings that represent various shapes of a building, and may include numerous sub-drawings to illustrate the shape of the building. The 2D building drawings may include metadata that indicate the number, name, type (e.g., floor plan, section, elevation, etc.), and discipline for each of the 2D building drawings. In one example embodiment, a user may select, via a user interface of UE 101, a 2D building drawing, whereupon the user is presented with user interface 501. User interface 501 may include various user interface elements to indicate the number, name, model, discipline, and type of the selected 2D building drawing. The user may access, review, edit, and/or update the metadata for the selected 2D building drawing. It should be appreciated that additional and/or fewer user interface elements may be displayed within user interface 501 per requirement.

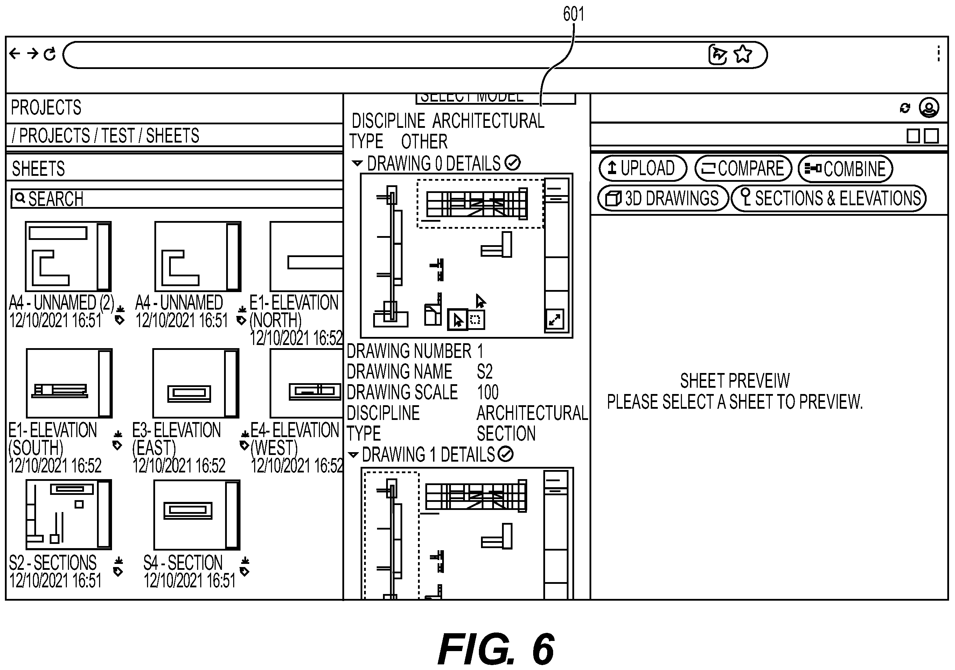

FIG. 6 is a user interface diagram that represents auto-detection of 2D building drawings, according to one example embodiment. In one embodiment, 2D building drawings may be architectural drawings that include several sub-drawings that illustrate various shapes of a structure. As depicted, in user interface 601, the drawing conversion platform 109 may automatically detect data relating to these sub-drawings, e.g., drawing number, area information, drawing type, etc. The drawing conversion platform 109 may process the detected data to correlate these sub-drawings to generate a unified 3D design image in a 3D space.

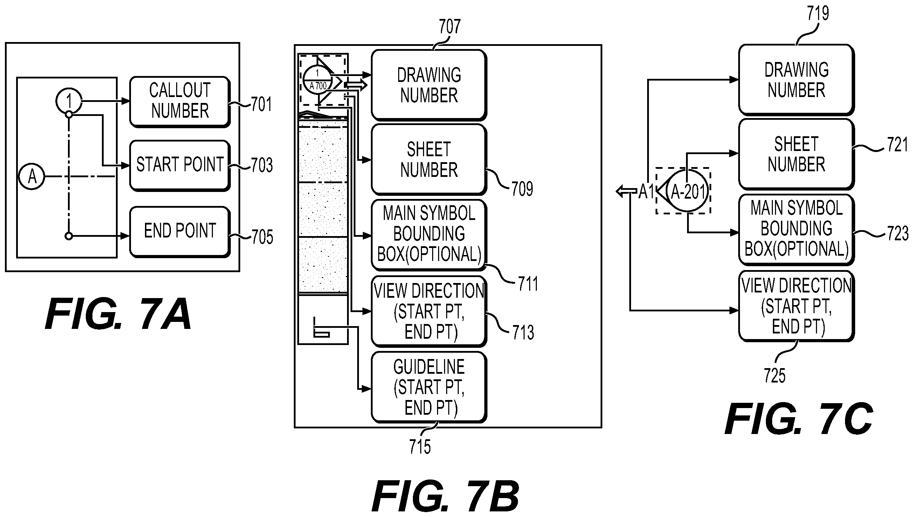

FIGs. 7 A-C are diagrams that represent symbols of 2D building drawings, according to one example embodiment. Users, e.g., architects, builders, inspectors, engineers, etc., may use multiple types of 2D building drawings/drawings including floor plans, sections, and elevations to represent a 3D shape of a building in 2D. In one embodiment, floor plans may represent the planar shape of the building, sections may represent the cross-sectional shape of the building, and elevations may represent the facade of the building in several directions. The drawing conversion platform 109 may automatically recognize the symbols of 2D building drawings, e.g., callout symbols, section symbols, and elevation symbols. These symbols are processed and the information contained therein is interpreted to link the floor plans, sections, and elevations of the 2D building drawings. The linked 2D building drawings are automatically aligned and presented in a 3D space.

FIG. 7A illustrates a callout symbol that points toward the arrangement of 2D building drawings. The callout symbol may include callout number 701, start point 703, and end point 705. While a particular format for the callout symbol is discussed, it should be understood that the callout symbol may include any additional components per requirement. In one embodiment, drawing conversion platform 109 may process the callout symbol to detect callout number 701, start point 703, and end point 705. The drawing conversion platform 109 may automatically link and align the 2D building drawings based upon the detected attributes of the callout symbol. For example, linked and aligned 2D building drawings may have the same callout number. In one example embodiment, drawing conversion platform 109 may arrange the callout lines of the callout symbol to match the 2D building drawings.

FIG. 7B illustrates a section symbol that indicates a correlation between the floor plan and the section of 2D building drawings. The section symbol may include drawing number 707, sheet number 709, main symbol bounding box 711, view direction 713, and guideline 715. While a particular format for section symbol is discussed, it should be understood that section symbol may include any additional elements per requirement. In one embodiment, the section symbol may include the number of the 2D building drawing containing the section to which it is connected, e.g., drawing number 707. The section symbol may also include a number of the section within the 2D building drawing, e.g., sheet number 709. The section symbol may further include information regarding the direction of the gaze viewed from that section, e.g., view direction 713. The section symbol may also include information on the starting point and ending point of the section, e.g., guideline 715. In one embodiment, the drawing conversion platform 109 may automatically process the section symbol to detect its attributes, e.g., drawing number 707, sheet number 709, view direction 713, and guideline 715. The drawing conversion platform 109 may automatically link and align the floor plan and the section of the 2D building drawings in 3D space.

FIG. 7C depicts an elevation symbol that indicates a relationship between the floor plan and the elevation of 2D building drawings. The elevation symbol may include drawing number 719, sheet number 721, main symbol bounding box 723, and view direction 725. While a particular format for elevation symbol is discussed, it should be understood that elevation symbol may include any additional components per requirement. In one embodiment, the elevation symbol may include the number of the 2D building drawing containing the elevation to which it is linked, e.g., drawing number 719. The elevation symbol may also include the number of the elevation within the 2D building drawings, e.g., sheet number 721. The elevation symbol may further include information on the direction of the view from the elevation, e.g., view direction 725. The elevation symbol may also include information regarding the starting point and ending point for the elevation. In one embodiment, the drawing conversion platform 109 may automatically process the elevation symbol to detect its attributes, e.g., drawing number 719, sheet number 721, and view direction 725. The drawing conversion platform 109 may automatically link and align the floor plan and the elevation of the 2D building drawings in 3D space.

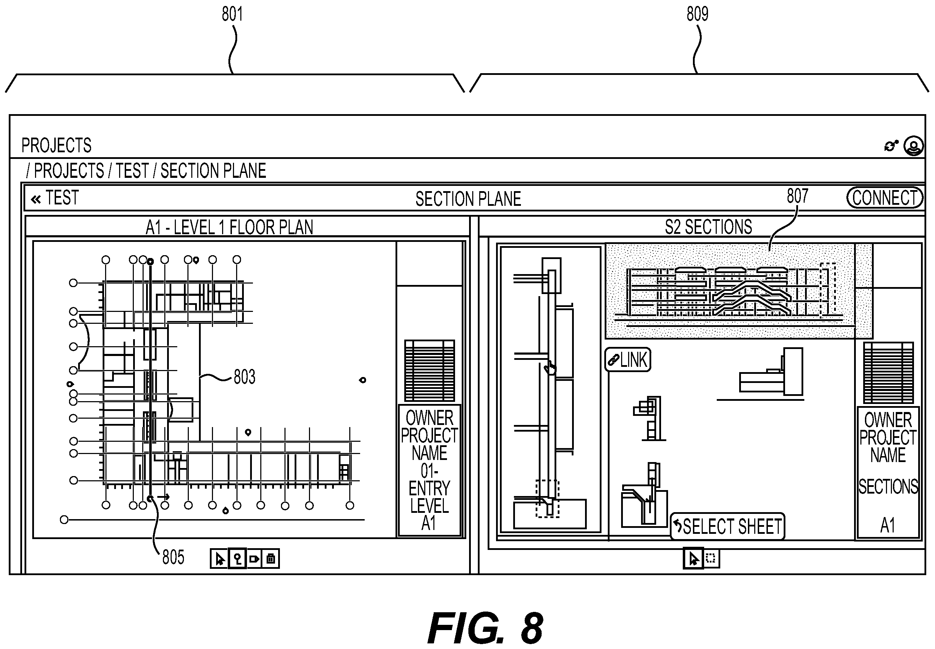

FIG. 8 is a user interface diagram that represents a detection of a symbol in a 2D building drawing and a linking of the detected symbol to a corresponding 2D building drawing, according to one example embodiment. In one instance, a user may select, via user interface 801, 2D building drawing 803. Drawing conversion platform 109 may process the selected 2D building drawing 803 to detect symbol 805, e.g., a section symbol on the floor plan. Drawing conversion platform 109 may automatically link symbol 805 to 2D building drawing 807. The 2D building drawing 807 may be displayed on user interface 809 adjacent to user interface 801. In one instance, a user may review the automated linkage between 2D building drawings 803 and 807, and may approve such automated linkage by pressing a user interface element, e.g., the 'OK' button, in UE 101. While a particular display format for presenting 2D building drawings 803 and 807 is discussed, it should be understood that 2D building drawings 803 and 807 may be displayed in any other manner. In one example embodiment, 2D building drawing 803 may be displayed in a first viewing mode in the user interface of UE 101. Drawing conversion platform 109 may transition from first viewing mode to a split-screen viewing, and 2D building drawings 803 and 807 are presented on user interfaces 801 and 809, respectively.

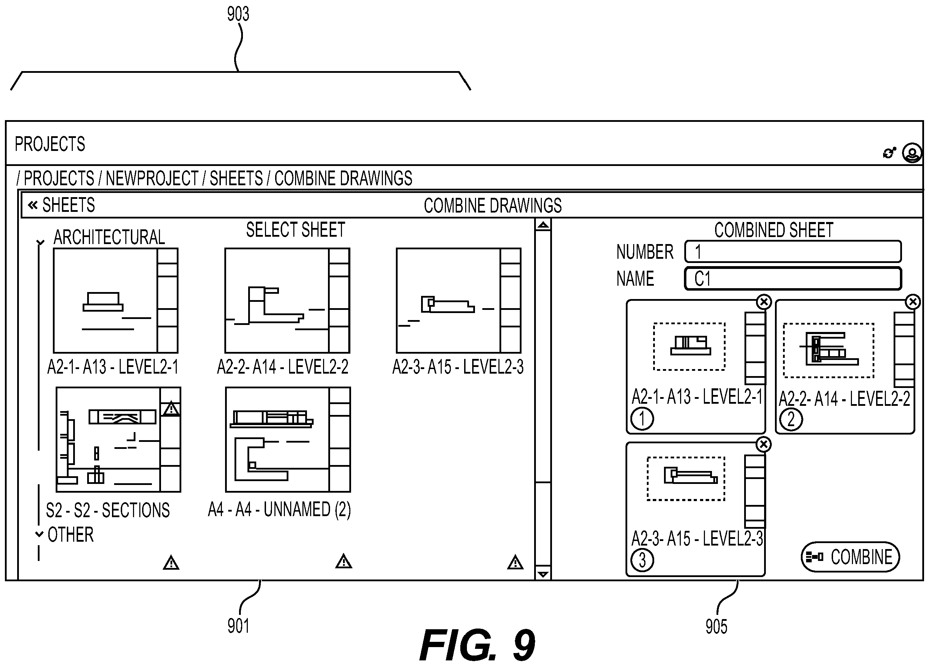

FIG. 9 is a user interface diagram that represents automatic combining of partial 2D building drawings, according to one example embodiment. If the size of a structure, e.g., a building, is large, then it may be necessary to create several 2D building drawings to represent a single plane, a section, or an elevation of the structure. In this example embodiment, a user may separately create numerous partial 2D building drawings 901 to represent the single plane, section, or elevation of the large structure (as shown in display area 903). Drawing conversion platform 109 may receive partial 2D building drawings 901 from UE 101, and may process 2D building drawings 901 to detect symbols, e.g., callout symbols, and metadata. Drawing conversion platform 109 may automatically collect or select partial 2D building drawings 901 based on the symbols and metadata, to represent the plane, elevation, or section in a 3D space (as shown in display area 905). Alternatively, the user may have the option of selecting one or more partial 2D building drawings to be combined, for example by clicking on one or more partial 2D building drawings or designating one or more partial 2D building drawings by their number and/or name.

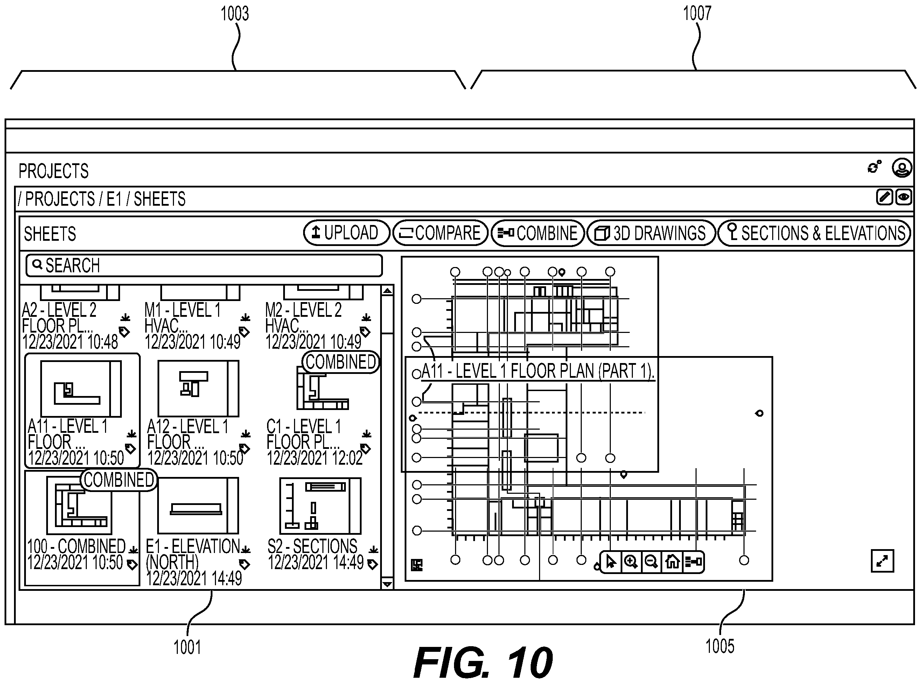

FIG. 10 is a user interface diagram that represents automatic combining of partial 2D building drawings to generate a single 2D building drawing, according to one example embodiment. As previously discussed, if the size of a structure is large, then a user may create numerous partial 2D building drawings 1001 to represent a single plane, section, or elevation of the structure (as shown in display area 1003). Drawing conversion platform 109 may receive partial 2D building drawings from 1001 UE 101 and may process 2D building drawings 1001 to detect symbols and metadata. Drawing conversion platform 109 may automatically collect or select these partial 2D building drawings 1001 based on the symbols and metadata to generate a single 2D building drawing 1005 that represents the entire plane, elevation, or section of the large structure in a 3D space (as shown in display area 1007). In one instance, the resultant 2D building drawing 1005 may be tagged as "combined," and a user may be allowed to select the individual partial 2D building drawings from 2D building drawing 1005.

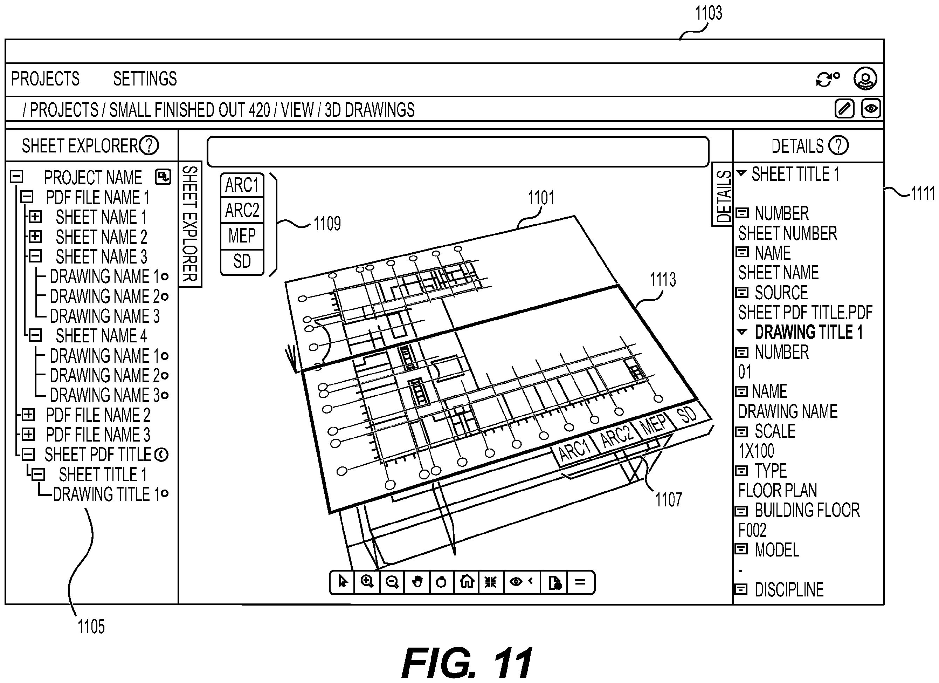

FIG. 11 is a user interface diagram that represents aligned 2D building drawings as a 3D design model in a 3D space, according to one example embodiment. Drawing conversion platform 109 may automatically arrange and align various 2D building drawings in a 3D space based, at least in part, on symbols and metadata. In one example embodiment, drawing conversion platform 109 may generate a 3D design model 1101 from the aligned 2D building drawings. A 3D drawing viewer 1103 may generate a presentation of 3D design model 1101 that intuitively depict the relationships between the 2D building drawings in 3D space and may show the entire floor plan, elevation, and/or section of a structure. In one embodiment, 3D drawing viewer 1103 may include sheet explorer 1105, 3D discipline tab 1107, side discipline tab 1109, detail drawing property view 1111, and partial drawing viewer 1113 to provide detailed information and multiple views for the 3D design model. While a particular format for 3D drawing viewer 1103 is discussed, it should be understood that 3D drawing viewer 1103 may include any additional elements per requirement.

In one embodiment, sheet explorer 1105 may allow the users to navigate between multiple 2D building drawings and/or 3D design models. In one embodiment, the plurality of 2D building drawings and/or 3D design models may be categorized by subjects or disciplines, e.g., civil engineering, structural engineering, architectural engineering, mechanical engineering, electrical engineering, and/or plumbing. The 3D discipline tab 1107 and/or side discipline tab 1109 may allow the users to switch between the plurality of 2D building drawings and/or 3D design models based on the subject or discipline. In one embodiment, detail drawing property view 1111 may provide the users with additional details on the 2D building drawings and/or 3D design models. In one embodiment, partial drawing viewer 1113 may allow the users to view partial 2D building drawings from the 3D design models. The 3D drawing viewer 1103 may also allow the users to view the 3D design model 1101 from any direction through the functions of rotate, zoom, and/or panning.

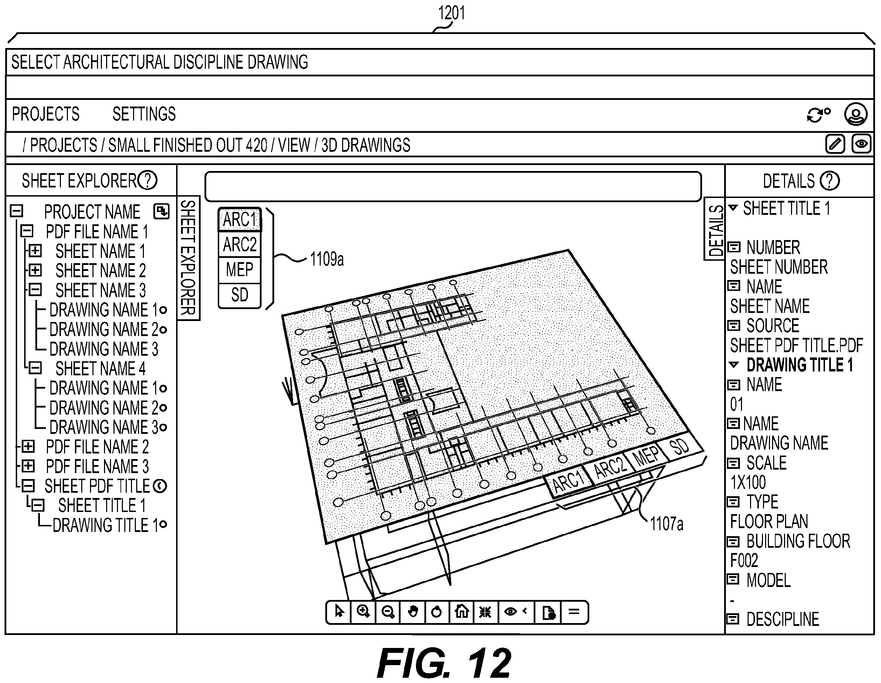

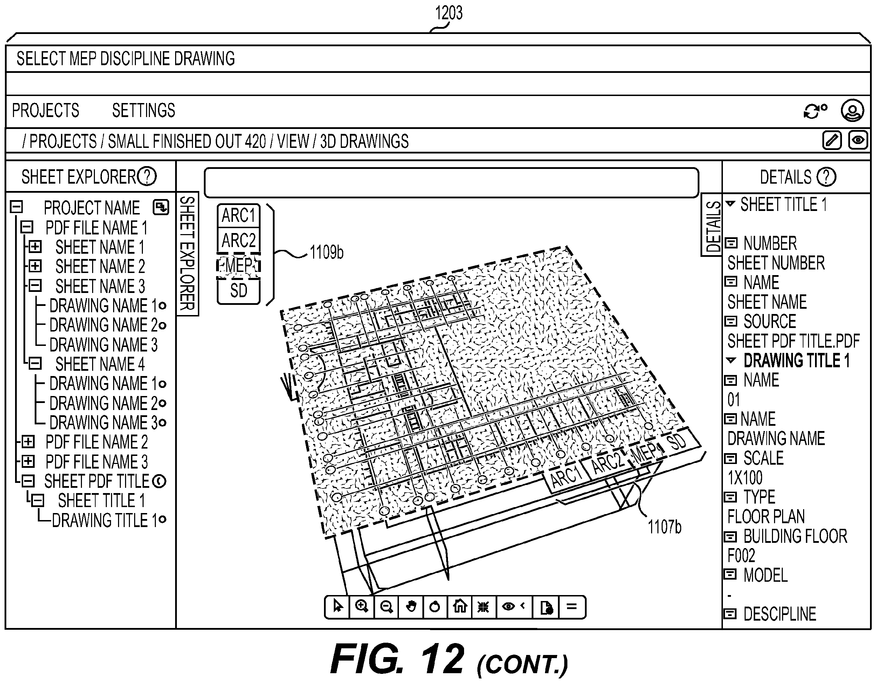

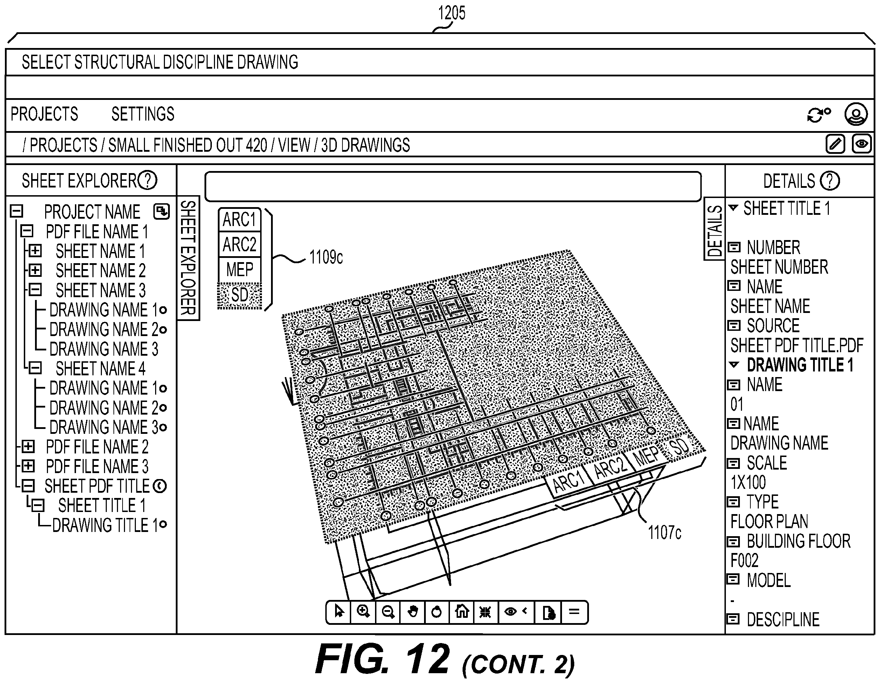

FIG. 12 is a user interface diagram that represents various 3D design model views based on subjects or disciplines, according to one example embodiment. Since 3D design models may be categorized by subjects or disciplines, a user may interact with discipline tabs 1107a-1107c and/or side discipline tabs 1109a-1109c to switch between architectural discipline view 1201, mechanical, electrical, and plumbing (MEP) discipline view 1203, and/or structural discipline view 1205. In this example embodiment, discipline tabs 1107a-1107c are located at the bottom corner of 3D design models, and side discipline tabs 1109a-1109c are located at the top of the 3D drawing viewer, such placement makes it easier for the users to switch 3D design model subject/discipline views while observing the interior of a building. However, it is understood that discipline tabs and side discipline tabs may be positioned at any other locations in the user interface.

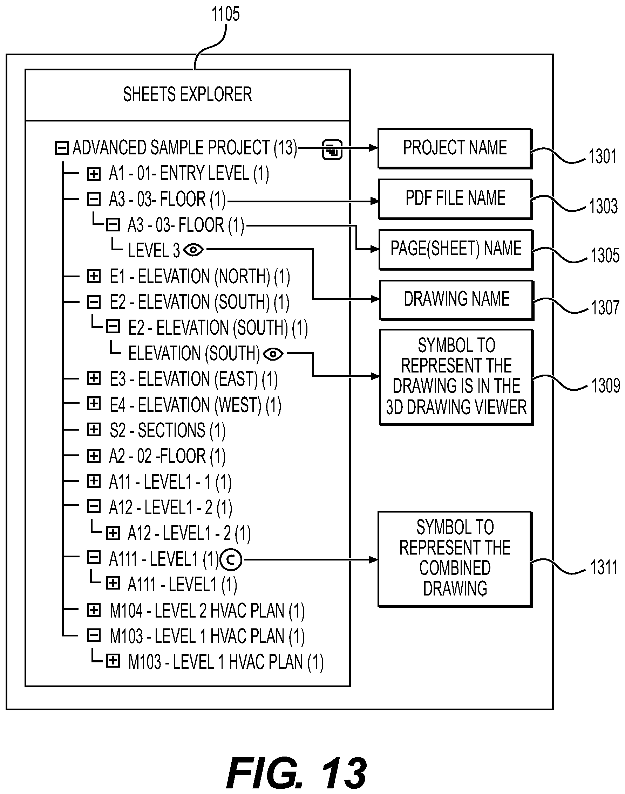

FIG. 13 illustrates a sheet explorer view that shows the hierarchy for a 3D design model in a tree structure, according to one example embodiment. Sheet explorer 1105 of 3D drawing viewer 1103 may include project name 1301, PDF file name 1303, page (sheet) name 1305 contained in the pdf file, and the drawing name 1307 contained in the sheet. Sheet explorer 1105 may also include an eye-shaped symbol 1309 that indicates the 2D building drawing is currently being used or displayed by 3D drawing viewer 1103. Sheet explorer 1105 may also include combine symbol 1311 to indicate that the 2D building drawing was created by combining a plurality of partial 2D building drawings.

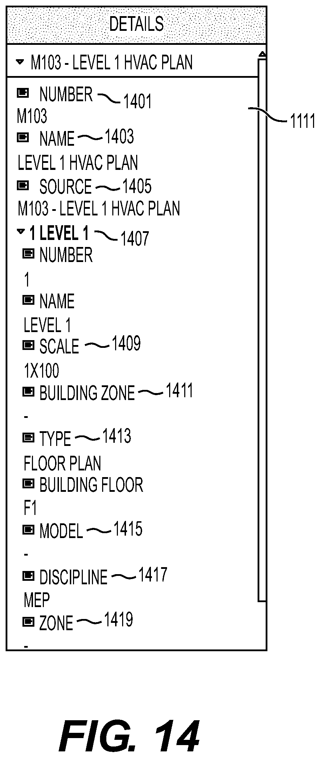

FIG. 14 illustrates a detailed view of a 3D design model, according to one example embodiment. Drawing conversion platform 109 may present detailed information for a 3D design model in detail drawing property view 1111 of 3D drawing viewer 1103. In this example embodiment, detail drawing property view 1111 may display various information pertaining to the 3D design model, such as number 1401, name 1403, source file name 1405, level 1407, scale 1409, building zone 1411, type 1413, model 1415, discipline 1417, and/or zone 1419. However, it is understood that detail drawing property view 1111 may include additional information about the 3D design model.

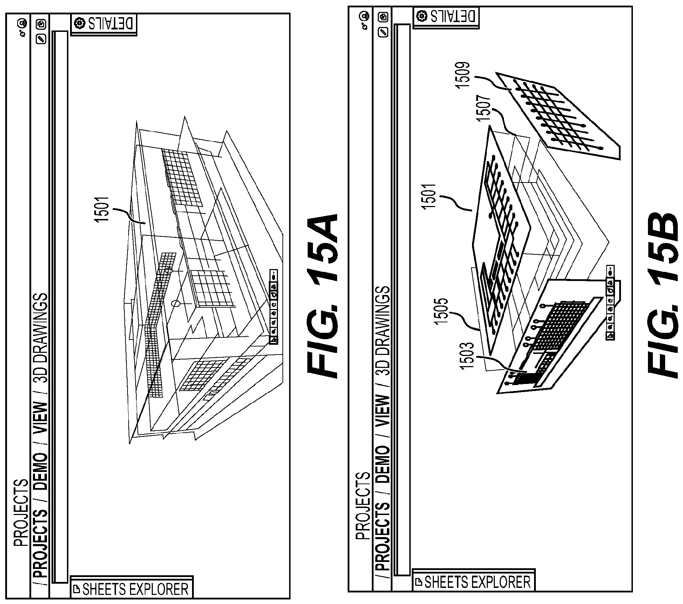

FIGs. 15 A-B show a 3D design model and an exploded view of the 3D design model, according to one example embodiment. In FIG. 15A, drawing conversion platform 109 may assemble a plurality of 2D building drawings that are linked together by symbols and metadata to generate 3D design model 1501. It may be difficult for a user to view the interior of 3D design model 1501, and the user may utilize the exploded view feature that moves the elevations of 3D design model 1501 outward from its original position so that the user can observe the interior of the 3D design model 1501.

FIG. 15B illustrates an exploded view of 3D design model 1501. As shown, elevations or sections 1503, 1505, 1507, and 1509 move outward from their original position, so that the design inside 3D design model 1501 is displayed unobtrusively. However, the location of the floor plan and the section do not change.

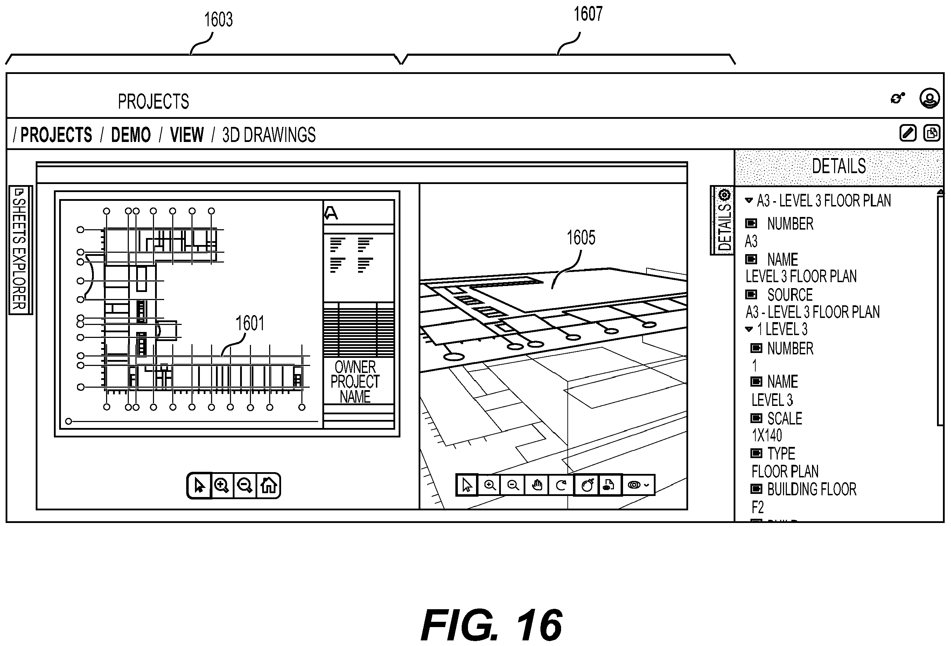

FIG. 16 is a user interface diagram that represents a side-by-side display of a 2D view and a 3D view for a 2D building drawing, according to one example embodiment. In one instance, drawing conversion platform 109 may receive a selection of 2D building drawing 1601, whereupon 2D building drawing 1601 may be displayed in user interface 1603. Drawing conversion platform 109 may automatically generate 3D view 1605 of 2D building drawing 1601 in user interface 1607. Such a display of the 3D view adjacent to the 2D view enables a user to thoroughly observe 2D building drawing 1601 by zooming and panning the 3D design model in 3D view 1605.

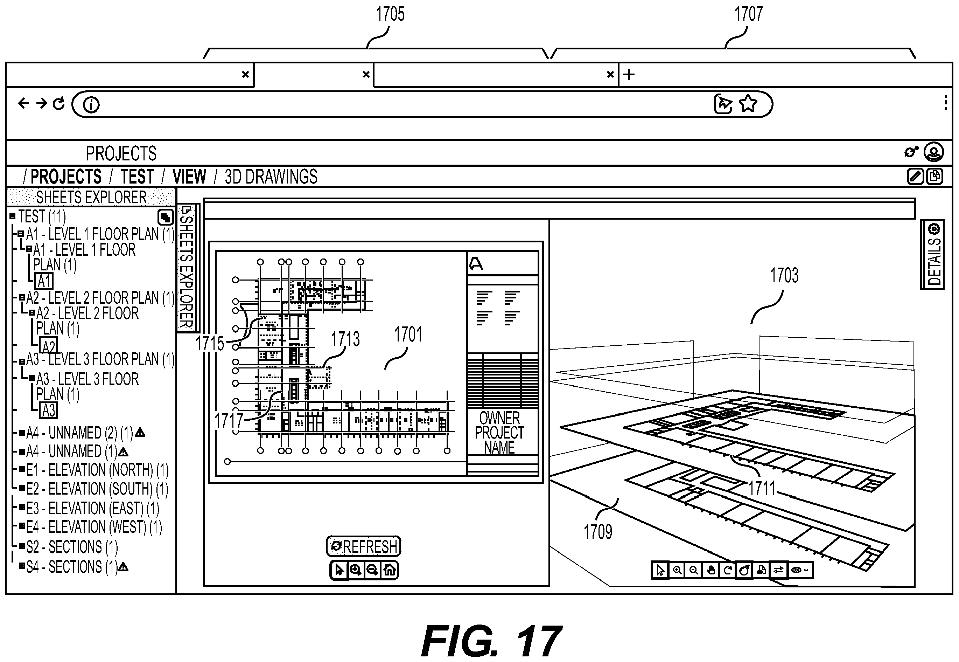

FIG. 17 is a user interface diagram that shows a comparison between components of the 3D design model in a 3D space, according to one example embodiment. In one instance, drawing conversion platform 109 may present 2D view 1701 and 3D view 1703 for 2D building drawings. 2D view 1701 and 3D view 1703 may be generated in user interfaces 1705 and 1707, respectively. In one embodiment, user interface 1705 may display auto-alignment of a plurality of 2D building drawings. In this example embodiment, user interface 1705 displays auto-alignment of a first 2D building drawing (represented by longer dotted lines 1713) and a second 2D building drawing (represented by shorter dotted lines 1715). The overlap between these auto-aligned 2D building drawings is shown by solid lines 1717. Although the first and second 2D building drawings are represented by longer and shorted dotted lines, respectively, in the user interface 1705, 2D building drawings displayed in the user interface 1705 may be represented in a different manner in order to delineate one from another (e.g., each drawing may be coded or displayed in a unique manner). For example, instead of using shorter and longer dotted lines, the 2D building drawings may be represented by color-coded lines. As an example, the first 2D building drawing may be represented by red-colored lines, the second 2D building drawing may be represented by blue-colored lines, and the overlap between the two, auto-aligned 2D building drawings may be represented by black-colored lines. Drawing conversion platform 109 may automatically display two, user-selected 2D building drawings in 3D space, e.g., 3D objects 1709 and 1711, and show the differences. Since 3D objects 1709 and 1711 are aligned, the review results are shown by simply comparing 3D objects 1709 and 1711 without the need to go through the complicated drawing alignment process.

FIG. 18 illustrates an implementation of a computer system designated 1800. The computer system 1800 can include a set of instructions that can be executed to cause the computer system 1800 to perform any one or more of the methods or computer based functions disclosed herein. The computer system 1800 may operate as a standalone device or may be connected, e.g., using a network, to other computer systems or peripheral devices.

In a networked deployment, the computer system 1800 may operate in the capacity of a server or as a client user computer in a server-client user network environment, or as a peer computer system in a peer-to-peer (or distributed) network environment. The computer system 1800 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a landline telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the computer system 1800 can be implemented using electronic devices that provide voice, video, or data communication. Further, while a single computer system 1800 is illustrated, the term "system" shall also be taken to include any collection of systems or sub-systems that individually or jointly execute a set, or multiple sets, of instructions to perform one or more computer functions.

As illustrated in FIG. 18, the computer system 1800 may include a processor 1802, e.g., a central processing unit (CPU), a graphics processing unit (GPU), or both. The processor 1802 may be a component in a variety of systems. For example, the processor 1802 may be part of a standard personal computer or a workstation. The processor 1802 may be one or more general processors, digital signal processors, application specific integrated circuits, field programmable gate arrays, servers, networks, digital circuits, analog circuits, combinations thereof, or other now known or later developed devices for analyzing and processing data. The processor 1802 may implement a software program, such as code generated manually (i.e., programmed).

The computer system 1800 may include a memory 1804 that can communicate via a bus 1808. The memory 1804 may be a main memory, a static memory, or a dynamic memory. The memory 1804 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 1804 includes a cache or random-access memory for the processor 1802. In alternative implementations, the memory 1804 is separate from the processor 1802, such as a cache memory of a processor, the system memory, or other memory. The memory 1804 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 1804 is operable to store instructions executable by the processor 1802. The functions, acts or tasks illustrated in the figures or described herein may be performed by the programmed processor 1802 executing the instructions stored in the memory 1804. The functions, acts or tasks are independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

As shown, the computer system 1800 may further include a display 1810, such as a liquid crystal display (LCD), an organic light emitting diode (OLED), a flat panel display, a solid-state display, a cathode ray tube (CRT), a projector, a printer or other now known or later developed display device for outputting determined information. The display 1810 may act as an interface for the user to see the functioning of the processor 1802, or specifically as an interface with the software stored in the memory 1804 or in the drive unit 1806.

Additionally or alternatively, the computer system 1800 may include an input device 1812 configured to allow a user to interact with any of the components of system 1800. The input device 1812 may be a number pad, a keyboard, or a cursor control device, such as a mouse, or a joystick, touch screen display, remote control, or any other device operative to interact with the computer system 1800.

The computer system 1800 may also or alternatively include a disk or optical drive unit 1806. The disk drive unit 1806 may include a computer-readable medium 1822 in which one or more sets of instructions 1824, e.g. software, can be embedded. Further, the instructions 1824 may embody one or more of the methods or logic as described herein. The instructions 1824 may reside completely or partially within the memory 1804 and/or within the processor 1802 during execution by the computer system 1800. The memory 1804 and the processor 1802 also may include computer-readable media as discussed above.

In some systems, a computer-readable medium 1822 includes instructions 1824 or receives and executes instructions 1824 responsive to a propagated signal so that a device connected to a network 1826 can communicate voice, video, audio, images, or any other data over the network 1826. Further, the instructions 1824 may be transmitted or received over the network 1826 via a communication port or interface 1820, and/or using a bus 1808. The communication port or interface 1820 may be a part of the processor 1802 or may be a separate component. The communication port 1820 may be created in software or may be a physical connection in hardware. The communication port 1820 may be configured to connect with a network 1826, external media, the display 1810, or any other components in computer system 1800, or combinations thereof. The connection with the network 1826 may be a physical connection, such as a wired Ethernet connection or may be established wirelessly as discussed below. Likewise, the additional connections with other components of the computer system 1800 may be physical connections or may be established wirelessly. The network 1826 may alternatively be directly connected to the bus 1808.

While the computer-readable medium 1822 is shown to be a single medium, the term "computer-readable medium" may include a single medium or multiple media, such as a centralized or distributed database, and/or associated caches and servers that store one or more sets of instructions. The term "computer-readable medium" may also include any medium that is capable of storing, encoding, or carrying a set of instructions for execution by a processor or that cause a computer system to perform any one or more of the methods or operations disclosed herein. The computer-readable medium 1822 may be non-transitory, and may be tangible.

The computer-readable medium 1822 can include a solid-state memory such as a memory card or other package that houses one or more non-volatile read-only memories. The computer-readable medium 1822 can be a random-access memory or other volatile re-writable memory. Additionally or alternatively, the computer-readable medium 1822 can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated hardware implementations, such as application specific integrated circuits, programmable logic arrays and other hardware devices, can be constructed to implement one or more of the methods described herein. Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The computer system 1800 may be connected to one or more networks 1826. The network 1826 may define one or more networks including wired or wireless networks. The wireless network may be a cellular telephone network, an 802.11, 802.16, 802.20, or WiMax network. Further, such networks may include a public network, such as the Internet, a private network, such as an intranet, or combinations thereof, and may utilize a variety of networking protocols now available or later developed including, but not limited to TCP/IP based networking protocols. The network 1826 may include wide area networks (WAN), such as the Internet, local area networks (LAN), campus area networks, metropolitan area networks, a direct connection such as through a Universal Serial Bus (USB) port, or any other networks that may allow for data communication. The network 1826 may be configured to couple one computing device to another computing device to enable communication of data between the devices. The network 1826 may generally be enabled to employ any form of machine-readable media for communicating information from one device to another. The network 1826 may include communication methods by which information may travel between computing devices. The network 1826 may be divided into sub-networks. The sub-networks may allow access to all of the other components connected thereto or the sub-networks may restrict access between the components. The network 1826 may be regarded as a public or private network connection and may include, for example, a virtual private network or an encryption or other security mechanism employed over the public Internet, or the like.

In accordance with various implementations of the present disclosure, the methods described herein may be implemented by software programs executable by a computer system. Further, in an exemplary, non-limited implementation, implementations can include distributed processing, component/object distributed processing, and parallel processing. Alternatively, virtual computer system processing can be constructed to implement one or more of the methods or functionality as described herein.

Although the present specification describes components and functions that may be implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the steps of methods discussed are performed in one embodiment by an appropriate processor (or processors) of a processing (i.e., computer) system executing instructions (computer-readable code) stored in storage. It will also be understood that the disclosed embodiments are not limited to any particular implementation or programming technique and that the disclosed embodiments may be implemented using any appropriate techniques for implementing the functionality described herein. The disclosed embodiments are not limited to any particular programming language or operating system.

It should be appreciated that in the above description of exemplary embodiments, various features of the present disclosure are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed embodiment requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment.

Furthermore, while some embodiments described herein include some but not other features included in other embodiments, combinations of features of different embodiments are meant to be within the scope of the present disclosure, and form different embodiments, as would be understood by those skilled in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the disclosed techniques.

In the description provided herein, numerous specific details are set forth. However, it is understood that embodiments of the present disclosure may be practiced without these specific details. In other instances, well-known methods, structures and techniques have not been shown in detail in order not to obscure an understanding of this description.

Thus, while there has been described what are believed to be the preferred embodiments, those skilled in the art will recognize that other and further modifications may be made thereto without departing from the spirit of the present disclosure, and it is intended to claim all such changes and modifications as falling within the scope of the present disclosure. For example, any formulas given above are merely representative of procedures that may be used. Functionality may be added or deleted from the block diagrams and operations may be interchanged among functional blocks. Steps may be added or deleted to methods described within the scope of the present disclosure.

The above disclosed subject matter is to be considered illustrative, and not restrictive, and the appended claims are intended to cover all such modifications, enhancements, and other implementations, which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description. While various implementations of the disclosure have been described, it will be apparent to those of ordinary skill in the art that many more implementations and implementations are possible within the scope of the disclosure. Accordingly, the disclosure is not to be restricted except in light of the attached claims and their equivalents.

## Claims

1. A computer-implemented method for displaying two-dimensional (2D) design images in a three-dimensional (3D) space, comprising:
receiving a plurality of 2D building drawings from a device, wherein the plurality of 2D building drawings include one or more symbols, metadata, or a combination thereof, and wherein the one or more symbols indicate a correlation between an elevation, a floorplan, and a section of the plurality of 2D building drawings;
processing the plurality of 2D building drawings to detect the correlation between the one or more symbols and the metadata of the plurality of 2D building drawings;
receiving a selection, via a user interface of the device, of a first 2D building drawing from the plurality of 2D building drawings, at least one first symbol in the first 2D building drawing, or a combination thereof;
retrieving a second 2D building drawing from the plurality of 2D building drawings based, at least in part, on the correlation between the at least one first symbol and at least one second symbol of the second 2D building drawing; and generating a 3D design model by aligning the first 2D building drawing and the second 2D building drawing in the 3D space.

2. The computer-implemented method of claim 1, further comprising:
detecting, via a trained machine learning model, the one or more symbols, the metadata, or a combination thereof associated with the plurality of 2D building drawings, wherein the trained machine learning model is trained using a library of sample images with sample symbols and sample metadata.

3. The computer-implemented method of claim 2, wherein correlating the at least one first symbol and the at least one second symbol further comprises:
extracting data associated with the at least one first symbol and the at least one second symbol, the metadata associated with the first 2D building drawing and the second 2D building drawing, or a combination thereof; and
linking the at least one first symbol of the first 2D building drawing and the at least one second symbol of the second 2D building drawing based, at least in part, on the extracted data and metadata.

4. The computer-implemented method of claim 1, further comprising:
displaying the first 2D building drawing in a first viewing mode in the user interface of the device; and
transitioning from the first viewing mode to a split-screen viewing mode based, at least in part, on the selection of the at least one first symbol from the first 2D building drawing, wherein the first 2D building drawing is shown within a first display area and the second 2D building drawing is shown within a second display area adjacent to the first display area.

5. The computer-implemented method of claim 1, further comprising:
displaying the plurality of 2D building drawings in a first viewing mode in the user interface of the device; and
transitioning from the first viewing mode to a second viewing mode based, at least in part, on the selection of one or more 2D building drawings, wherein the plurality of 2D building drawings are shown within a first display area and the 3D design model is shown within a second display area adjacent to the first display area.

6. The computer-implemented method of claim 1, further comprising:
generating an exploded view of the 3D design model, wherein the exploded view changes a position of the elevation of the 3D design model to provide a detailed view of interior of the 3D design model.

7. The computer-implemented method of claim 1, further comprising:
categorizing the plurality of 2D building drawings by subject based, at least in part, on the metadata, wherein the subject includes civil engineering, structural engineering, architectural engineering, mechanical engineering, electrical engineering, plumbing, or a combination thereof; and
generating a user interface element to switch between the categorized plurality of 2D building drawings within the 3D space.

8. The computer-implemented method of claim 1, further comprising:
generating a user interface element to indicate a hierarchical relationship between the plurality of 2D building drawings, wherein the user interface element is a tree structure.

9. The computer-implemented method of claim 1, wherein the one or more symbols include a callout symbol, and wherein the callout symbol includes a callout number, a start point, and an end point to indicate an arrangement of the plurality of 2D building drawings.

10. The computer-implemented method of claim 1, wherein the one or more symbols include a section symbol, and wherein the section symbol includes a drawing number, a sheet number, a view direction sign, and a guideline icon to indicate a correlation between the floorplan and the section of the plurality of 2D building drawings.

11. The computer-implemented method of claim 1, wherein the one or more symbols include an elevation symbol, and wherein the elevation symbol includes a drawing number, a sheet number, and a view direction sign to indicate a correlation between the floorplan and the elevation of the plurality of 2D building drawings.

12. The computer-implemented method of claim 1, wherein the plurality of 2D building drawings are in portable document format (PDF), and wherein the plurality of 2D building drawings include one or more of architectural drawings, engineering drawings, or construction drawings.

13. A system for displaying two-dimensional (2D) design images in a three-dimensional (3D) space, comprising:
one or more processors; and
at least one non-transitory computer readable medium storing instructions which, when executed by the one or more processors, cause the one or more processors to perform rthe method of any of claims 1 to 12.:

14. A non-transitory computer readable medium for displaying two-dimensional (2D) design images in a three-dimensional (3D) space, the non-transitory computer readable medium storing instructions which, when executed by one or more processors, cause the one or more processors to perform the method of any of claims 1 to 12.
